(19) Europäisches Patentamt
European Patent Office
Office européen des brevets

(11) Veröffentlichungsnummer: **0 069 702**
**B1**

(12) **EUROPÄISCHE PATENTSCHRIFT**

(45) Veröffentlichungstag der Patentschrift: **05.06.85**

(51) Int. Cl.⁴: **C 08 F 14/06**, C 08 F 2/18, C 08 F 2/42

(21) Anmeldenummer: **82810280.6**

(22) Anmeldetag: **30.06.82**

# (54) Kettenabbruchmittel für die Vinylchloridpolymerisation.

(30) Priorität: **06.07.81 US 280389**

(43) Veröffentlichungstag der Anmeldung: **12.01.83 Patentblatt 83/02**

(45) Bekanntmachung des Hinweises auf die Patenterteilung: **05.06.85 Patentblatt 85/23**

(84) Benannte Vertragsstaaten: **BE DE FR GB IT NL**

(56) Entgegenhaltungen:
**US-A- 3 285 855**
**US-A- 4 229 598**

(73) Patentinhaber: **CIBA-GEIGY AG**
**Postfach**
**CH-4002 Basel (CH)**

(72) Erfinder: **Reid, William John, Dr.**
**Box 15 RR No. 4**
**New Fairfield, CT 06810 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 069 702 B1

Jouve, 18, rue St-Denis, 75001 Paris, France

**Beschreibung**

Bei dem grundlegenden Verfahren der Vinylpolymerisation handelt es sich um die Anlagerung eines Vinylmonomers an eine wachsende Polymerkette. Die Polymerisation wird bei der richtigen Temperatur unter Druck in Gegenwart eines Initiators durchgeführt. Die Länge der Polymerkette nimmt weiter zu, bis auf irgendeine Weise ein Abbruch erfolgt.

Im Hinblick auf die Polymerisation von Vinylchlorid wird die weitaus überwiegende Menge Polyvinylchlorid durch Suspensionspolymerisation hergestellt. Bei diesem Verfahren werden das Vinylchloridmonomer und ein Initiator durch intensives Bewegen in einer Wasserphase bei richtiger Temperatur und Druck dispergiert. Dabei verwendet man Suspensionsmittel wie Methyl- oder Aethylcellulose, Gelatine, Polyvinylalkohol oder sonstige wasserlösliche Polymere, um die Suspension während der Polymerisation zu stabilisieren. Die feinen Polymerkörnchen in Form einer Aufschlämmung werden aus dem Reaktor ausgetragen und zur Entfernung des Wassers zentrifugiert oder filtriert. Gründliches Waschen und Trocknen des Polymers, um Spuren des Suspensionsstabilisators und Reaktionsmediums zu entfernen, bilden den Abschluss des Verfahrens.

Gegen Ende des Polymerisationsvorgangs beginnt der Druck im System abzufallen, und kurz danach tritt eine Spitze in der Polymerisationsgeschwindigkeit auf. Nach der Spitze beginnt die Geschwindigkeit scharf abzufallen, und die Polymerkügelchen werden mit der Absorption des freien Monomeren im Polymer weniger porös. Ein solcher Wechsel im Teilchencharakter im Hinblick auf sowohl Porosität als auch Teilchengrössenverteilung stellt für den Hersteller einen Nachteil in der Gestalt verringerter Leistung und Wirtschaftlichkeit dar. Die zinenartige poröse Oberfläche ist für erhöhte Weichmacheraufnahme zur Bildung trockener Rezepturen für verschiedene Extrusions- oder Walzvorgänge wünschenswert. Um solche nachteilige Wirkungen auszuschliessen, wird der Hersteller die Polymerisationsreaktion vor vollständiger Umsetzung des Monomeren abbrechen. Es liegt in der Erfahrung des Herstellers, den besten Punkt zu bestimmen, bei dem die Polymerisation abgebrochen wird, um ein Polymer hoher Qualität zu erhalten, obwohl im allgemeinen 70 bis 90 % Umsetzung den Abbruchspunkt bedeuten.

Verschiedene Methoden zum Abbruch der Polymerisation haben Eingang gefunden. Eine rein mechanische Möglichkeit bestand darin, die Polymeraufschlämmung in einen evakuierten Ausreibbehälter auszutragen und die Temperatur und den Druck schnell abzusenken, um die Polymerisation wirksam anzuhalten.

Verschiedene chemische Möglichkeiten haben sich ebenfalls durchgesetzt. Die zahlreichen herkömmlichen chemischen Methoden zum Abbruch der Vinylpolymerisationsreaktionen sind im einzelnen in chemischen Texten und Veröffentlichungen zu finden. Bei neueren Möglichkeiten handelte es sich um den Zusatz von Abbruchmitteln oder Kettenabbrechern, die die Weiterbildung freier Radikale hemmen, um die Entfernung von nicht umgesetztem Monomer und um die Verarbeitung der umgesetzten Aufschlämmung zu trockenem Polyvinylchlorid. So wurden Verbindungen wie α-Methylstyrol, Bisphenol A und verschiedene sterisch gehinderte Phenolantioxydantien der Reaktionsrezeptur zu einem vorbestimmten Punkt zwecks Kettenabbruch zugesetzt. Unter diesen Verbindungen wurde 2,6-Di-tert.-butyl-4-methylphenol, d. h. BHT, am meisten als Kettenabbruchmittel durch Zusatz zum Polymerisationssystem am gewünschten Abbruchpunkt eingesetzt. Verschiedene weitere sterisch gehinderte Phenole mit tertiär-Butylsubstituenten in 2- und 6-Stellung am Benzolring wurden ebenfalls für diesen Zweck verwendet. Die erzielten Leistungen mit diesen sterisch gehinderten Phenolen liessen jedoch zu wünschen übrig, da diese Materialien kaum wirksam sind bei Zusätzen in Konzentrationen bis zu etwa 250 ppm. BHT zeigte ebenfalls diese Einschränkung, da es in den niedrigeren, eher erwünschten Konzentrationsbereichen eines wirksamen Kettenabbruchs unfähig ist.

Eine weitere PVC-Kettenabbruchzusammensetzung auf Grundlage sterisch gehinderter Phenole wurde in U.S. Patentschrift 4 229 598 offenbart. Diese Zusammensetzung wird durch Alkylierung eines Fraktionsschnitts aus dem Produkt der Dampfphasenmethylierung von Phenol hergestellt. Die alkylierte Fraktion ist ein spezielles Gemisch aus Kresylsäuren und ergibt ein entsprechendes Gemisch einfacher Methyl-t-butylphenole. Diese Gemische werden indessen zwangsläufig nach ziemlich komplizierten und aufwendigen Verfahren hergestellt.

Die Hauptaufgabe der vorliegenden Erfindung besteht deshalb darin, Vinylchloridsuspensionspolymerisationsreaktionen so abzuändern, dass der Wirkungsgrad der Kettenabbruchstufe erhöht wird.

Nach einer weiteren Aufgabe ist eine Klasse von Zusatzstoffen zu definieren, die beim Zusatz zum Polymerisationsystem den oben erwähnten erhöhten Wirkungsgrad bewirkt.

Noch eine weitere Aufgabe besteht darin, die Parameter dieses verbesserten Polymerisationsverfahrens zu definieren.

Verschiedene weitere Aufgaben und Vorteile dieser Erfindung sind ohne weiteres aus der nachfolgenden Beschreibung im einzelnen ersichtlich.

Ueberraschenderweise wurde nun gefunden, dass der Wirkungsgrad des Kettenabbruchs bei Vinylchloridsuspensionspolymerisationen sich durch Zusatz einer Klasse sterisch gehinderter Phenole mit einer Methylgruppe am Phenylring oder in Verbindung damit, vorzugsweise in ortho- oder meta-Stellung zur OH-Gruppe, zum Polymerisationsreaktionssystem zu einem Zeitpunkt, wenn eine vorbestimmte Menge Monomer umgesetzt ist, erheblich erhöhen lässt. So führt die Gegenwart der Methylgruppe, vorzugsweise als Ersatz für eine der tertiären Butylgruppen, die im allgemeinen die phenolischen Gruppen in den Materialien des Standes der Technik abschirmen, zu sofortigem Abbruch der Polymerisationsreaktion. Auf diese Weise erfolgt schneller Kettenabbruch, wodurch die Produktion von Polyvinylchlorid hoher Qualität in hohen Ausbeuten erleichtert wird. Diese Ergebnise erzielt man ohne jegliche erhebliche Abänderung der Suspensionspolymerisationsreaktion und ohne irgendwelche begleitenden Nachteile. Die Leistung dieser Kettenabbruchmittel ist erheblich besser als die der Materialien des Standes der Technik, indem sie zu raschem und vollständigem Kettenabbruch führen und diese verbesserten Leistungswerte in erheblich verringerten Konzentrationsbereichen bewirken. Da diese phenolischen Materialien anerkannte Antioxydantien und Hitzestabilisatoren für polymere Systeme darstellen, hat deren Zusatz zur Polymerisationsreaktion zur Folge, dass die Weiterbildung freier Radikale wirksam angehalten wird, während entsprechend dem gebildeten Polyvinylchlorid hohe Stabilitätswerte verliehen werden. Zudem verbleiben etwa 90-95 % des Kettenabbruchmittels im Harz nach dem Abstreifen und/oder Trocknen, so dass eine Verunreinigung des zurückgewonnenen Monomers praktisch ausgeschlossen ist ; Dagegen ist zu erwarten, dass Materialien niedrigeren Molekulargewichts wie BHT sich mit dem überschüssigen Monomer im Gasstrom verflüchtigen, so dass sie das Monomer verunreinigen und damit jegliche Polymerisationsreaktion, bei der das rückgeführte Monomer eingesetzt wird, hemmen.

Die beim erfindungsgemässen Verfahren anzuwendenten Kettenabbruchmittel entsprechen den Formeln

$$RX—(C_aH_{2a})—Q, \qquad (I)$$

worin R

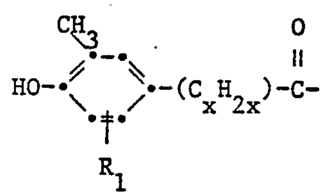

X Sauerstoff oder Schwefel, a eine ganze Zahl von 6 bis 30, x eine ganze Zahl von 0 bis 6, $R_1$ Alkyl mit 1 bis 8 Kohlenstoffatomen, Q Wasserstoff oder $—A—(C_yH_{2y})—R_2$, A Sauerstoff, Schwefel,

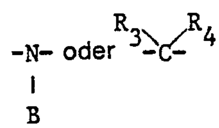
oder

y eine ganze Zahl von 0 bis 20, B Alkyl oder Alkanoyl mit jeweils 1 bis 6 Kohlenstoffatomen, $R_2$ Wasserstoff, Hydroxyl, Alkanoyloxy mit 1 bis 6 Kohlenstoffatomen oder

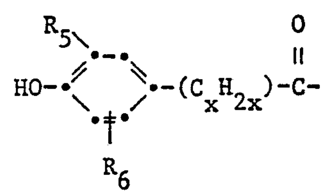

sowie $R_3$, $R_4$, $R_5$ und $R_6$ unabhängig voneinander Alkyl mit 1 bis 8 Kohlenstoffatomen bedeuten ;

$$RX—[(C_bH_{2b})—Y]_d—R_7 \qquad (II)$$

worin R und X die oben angegebenen Bedeutungen haben, b eine ganze Zahl von 2 bis 6, d eine ganze Zahl von 3 bis 40, Y Sauerstoff oder Schwefel und $R_7$ Wasserstoff, Alkyl mit 1 bis 6 Kohlenstoffatomen oder

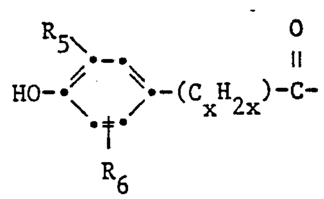

bedeuten sowie $R_5$, $R_6$ und x die oben angegebenen Bedeutungen haben ;
(III) 1,1,3-Tris-(2-methyl-4-hydroxy-5-tert.-butylphenyl)-butan,
(IV) 1,3,5-Tris-(2,6-dimethyl-3-hydroxy-4-tert.-butyl-benzyl)-isocyanurat oder

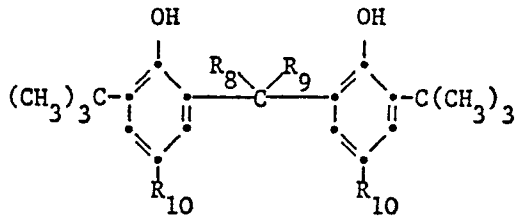 (V)

worin $R_8$ und $R_9$ unabhängig voneinander Wasserstoff oder Alkyl mit 1 bis 6 Kohlenstoffatomen und $R_{10}$ Alkyl mit 1 bis 6 Kohlenstoffatomen bedeuten.

In bevorzugten Verbindungen der Formel I ist X Sauerstoff, x 0 bis 2, $R_1$ Alkyl mit 1 bis 4 Kohlenstoffatomen, A Sauerstoff, y 0 bis 2, $R_2$ Wasserstoff oder das angegebene Phenol, $R_5$ und $R_6$ Alkyl mit 1 bis 4 Kohlen stoffatomen. Besonders bevorzugt werden solche Verbindungen, in denen $R_1$ und $R_6$ tert.-Butyl in ortho-Stellung zur HO-Gruppe, $R_5$ Methyl und x 2 sind.

Bevorzugte spezielle Verbindungen sind Octadecyl-3-(3-tert.-butyl-4-hydroxy-5-methylphenyl) propionat und 1,6-Hexandiol-bis-3-(3-tert.-butyl-4-hydroxy-5-methylphenyl)-propionat.

In bevorzugten Verbindungen der Formel II sind X und Y Sauerstoff, x 0 bis 2, $R_1$ Alkyl mit 1 bis 4 Kohlenstoffatomen, b 2, d 3. bis 20, $R_7$ das angegebene Phenol sowie $R_5$ und $R_6$ Alkyl mit 1 bis 4 Kohlenstoffatomen. Besonders bevorzugt werden solche Verbindungen, in denen $R_1$ und $R_6$ tert.-Butyl in ortho-Stellung zur OH-Gruppe und $R_5$ Methyl bedeuten. Eine bevorzugte spezielle Verbindung ist Triäthylenglykol-bis-3-(3-tert.-butyl-4-hydroxy-5-methyl-phenyl)-propionat.

In bevorzugten Verbindungen der Formel V sind $R_8$ und $R_9$ Wasserstoff oder Methyl und $R_{10}$ Methyl oder tertiär-Butyl. Bevorzugte spezielle Verbindungen sind Bis-(2-hydroxy-3-tert.-butyl-5-methylphenyl)-methan und 1,1-Bis-(2-hydroxy-3,5-di-tert.-butylphenyl)-äthan.

Methoden zur Herstellung dieser sterisch gehinderten Phenole sind dem Fachmann wohlbekannt. Für Auskünfte über die Phenole der Formeln I und II und deren Herstellungsmethoden wird besonders auf U.S. Patentschrifften 3 285 855, 3 944 594 und 4 032 562 verwiesen. Im allgemeinen stellt man diese aus den entsprechenden Säuren, Säurechloriden oder Niederalkylestern und Alkoholen oder Thioalkoholen unter Anwendung wohlbekannter Veresterungs- bzw. Umesterungsmethoden her.

Wie oben erwähnt sind diese sterisch gehinderten Phenole für ihre Antioxydanswirkung bei verschiedenen polymeren Substanzen einschliesslich Polyvinylchlorid bekannt. Beim Zusatz zu solchen Polymeren für Anwendungszwecke in diesem Gebiet werden sie im allgemeinen dem fertigen polymeren Produkt zugegeben.

Vinylchloridsuspensionspolymerisationsmethoden sind dem Fachmann ebenfalls wohlbekannt. Solche Methoden sind im einzelnen in ganz grundlegenden Polymerchemiebüchern wie beispielsweise W. Sorenson, « Preparative Methods of Polymer Chemistry [Präparative Methoden in der Polymerchemie] », zweite Auflage, Interscience Publishers, N.Y. (1968) beschrieben. Im allgemeinen beschickt man den Reaktor mit den entsprechenden Mengen Suspensionsmittel, Initiator und Emulgator im wässrigen Reaktionssystem. Typische Suspensionsmittel sind unter anderem Methyl- oder Aethylcellulose, Gelatine, Polyvinylalkohol oder sonstige wasserlösliche Polymere, während zu typischen Initiatoren Peroxydicarbonat, Benzoylperoxyd, Lauroylperoxyd, t-Butylperbenzoat, Acetylperoxyd, Cumolhydroperoxyd, Di-t-butylperoxyd und dergleichen gehören. Der Emulgator wird im allgemeinen zugesetzt, um die Porosität der Polymerteilchen zu erhöhen.

Diese Beschickung wird im allgemeinen dem Reaktor bei Raumtemperatur zugeführt. Danach wird das Vinylchloridmonomer eingeführt, der Rührer in Gang gesetzt und der Reaktor zum Polymerisationstemperaturbereich von 45 bis 60 °C aufgewärmt. Der Druck wird im Bereich von etwa $10 \cdot 10^6$ bis $11 \cdot 10^6$ Pa für die 5-7 Stunden lange, zum Erreichen von etwa 70 % Monomerumsatz erforderliche Reaktionsperiode liegen, wobei das verbleibende Monomer zur möglichen Wiederverwendung zurückgewonnen wird. Das Polymerisationsverfahren endet mit Filtrieren, Waschen und Trocknen.

Neben der chemischen Konstitution der vorliegenden Kettenabbruchmittel hängt ein wirksamer Abbruch von der Menge der zugesetzten Verbindung ab. Für Zwecke der vorliegenden Erfindung ergeben 25-5 000 ppm sterisch gehindertes Phenol, bezogen auf das Gewicht des Vinylchloridmonomers, die erwünschten Vorteile, wen sie zur Zeit von 0 bis 95 % Monomerumsatz zugesetzt werden. Bevorzugte Werte sind 50-1 000 ppm sterisch gehindertes Phenol, zugesetzt bei 70 bis 90 % Monomerumsatz, während besonders bevorzugte Konzentrationen 50-500 ppm sterisch gehindertes Phenol betragen.

Es sei bemerkt, dass der letztere Bereich von 70 bis 90 % einem für industriell befriedigende Polymerausbeuten erwünschten Bereich entspricht. Die vorliegenden sterisch gehinderten Phenole können jedoch die Polymerisationsreaktion in jeder beliebigen Stufe abbrechen. Dementsprechend spiegelt der Bereich 0-95 % die Möglichkeit eines vorzeitigen Abbruchs wieder, wenn Notzustände, Stromausfälle und dergleichen einen solchen frühen Abbruch verlangen.

Die Polymerisationsgeschwindigkeit lässt sich zahlenmässig als die Zeit bis zur vorbestimmten Umsetzung in der Polymerisationsreaktion und/oder der Grösse des Druckabfalls nach der Umsetzung definieren, wobei letztere besonders indicativ für die Abbruchswirksamkeit ist. In diesem Zusammenhang bedeutet « Umsetzung » den Punkt während der Polymerisation, in dem das Vinylchloridmonomer nicht mehr als freies Monomer verfügbar ist und in das Polymer absorbiert wird.

Die hierin bezeichneten Verbindungen führen deutlich zum sofortigen Abbruch von Vinylchloridpolymerisationsreaktionen. Dieser sofortige Abbruch ermöglicht die Herstellung von Polyvinylchlorid in hohen Ausbeuten und mit hoher Qualität. Ebenfalls ist es ersichtlich, dass diese Verbindungen einen solchen raschen Abbruch bei Konzentrationswerten bewirken, die erheblich unter den für derzeit verwendete Materialien erforderlichen liegen. Gleichzeitig gewährleisten die Verbindungen in den entstehenden Polymerprodukten eine willkommene Antioxydanswirkung, und nicht zulezt wird das verbleibende Monomer durch diese Verbindungen praktisch nicht verunreinigt.

Die nachfolgenden Beispiele erläutern die Erfindung ohne sie einzuschränken. Dabei sind Teile stets Gewichtsteile, falls nicht anders angegeben.

Beispiel 1

Dieses Beispiel erläutert eine typische Verfahrensweise zur Suspensionspolymerisation.

| Reagens | Teile |
|---|---|
| Vinylchloridmonomer (VCM) | 100,00 |
| Initiator — Peroxydicarbonat | 0,04 |
| Suspensionsmittel — Methoceltyp | 0,03 |
| NaOH | 0,10 |
| $H_2O$ (entlüftet, destilliert) | 200,00 |
| Antioxydans | verschiedene |
| Natrium-laurylsulfat | 0,02 |

A. Füllung einer Druckgasflasche mit 250 g VCM

1. Die Luft aus der Druckgasflasche evakuieren und diese wägen.
2. In der Kühltruhe abkühlen.
3. Eine mit VCM gefüllte, 3 785 $cm^3$ Edelstahlflasche in ein heisses Wasserbad (heisses Leitungswasser) stellen.
4. Eine 3 785 $cm^3$ -Flasche mittels biegsamem Edelstahlschlauch und Anschlussstücken mit einer 500 ml- Druckgasflasche verbinden.
5. Die 500 ml -Flasche während der Zugabe wägen und aufhören, wenn das ungefähr erforderliche VCM-Gewicht erreicht ist.
6. Die 500 ml -Flasche ohne Verbindungen wägen, um die genaue, darin befindliche Menge VCM zu bestimmen.

B. Beschickung des Reaktors

1. Vorsichtig das Trichterrohr in die Einlassöffnung des Reaktors einführen.
2. Natrium-laurylsulfat durch das Trichterrohr zugeben.
3. Das Rohr mit 50 Teilen Wasser waschen.
4. Suspensionsmittel in 1 %iger (wässriger) Lösung zugeben.
5. Das Rohr mit 50 Teilen Wasser waschen.
6. NaOH in 1 %iger (wässriger) Lösung zugeben.
7. Das Rohr mit 50 Teilen Wasser waschen.
8. Den Initiator in 7,5 %iger Lösung (Toluol) zugeben.
9. Das Rohr mit dem Rest des Wassers waschen.
10. Die Druck- und Temperaturschreiber einschalten.

C. Beschickung des Reaktors mit VCM

1. Die 500 ml-Vorführungsflasche in heissem Wasserbad (heisses Leitungswasser) erhitzen.
2. Die Druckgasflasche mittels Schnellanschlüssen mit dem Reaktor verbinden.
3. Die Ventile öffnen, so dass VCM innerhalb 60 Sekunden einfliesst.
4. Die Ventile absperren, den Rührmotor mit 500 U.p.M. einschalten und das vorgewärmte (62 °C) Wasserbad durch den Reaktoraussenmantel in Zirkulation setzen.

D. Hinweise für die Reaktion

1. Bei 500 U.p.M. rühren und innerhalb 30 Minuten auf die Reaktionstemperatur von 57 °C erhitzen.

2. Mit Peroxydicarbonatinitiator erreicht man die typische Reaktion bei 57 °C Reaktionstemperatur und $10.10^6$ bis $11.10^6$ Pa Reaktionsdruck ungefähr 30 Minuten nach dem Beginn des Erhitzens. Der Druck verbleibt in diesem Bereich für ungefähr 5-7 Stunden bzw. bis zu etwa 70 % Umsetzung wonach der Druck allmählich abfällt.

E. Zugabe des Kettenabbruchmittels bei 70 % Umsetzung

1. Die gewünschte Menge Kettenabbruchmittel in eine 40 ml -Druckgasglache geben.
2. Die 40 ml -Druckgasglasche mit 20 bis 30 g VCM wie bei Arbeitsweise A füllen.
3. Bei 70 % Umsetzung die Druckgasflasche mit dem Zugabeteil des Reaktors verbinden und mit einer elektrischen Heizpistole auf 90-100 °C erhitzen (mit Pyrometer nachprüfen).
4. Die Ventile öffnen, so dass die VCM/Kettenabbruchmittellösung einfliesst.
5. Die Ventile absperren und die Druckgasflasche zurückwägen, um sicherzustellen, dass sämtliche VCM/Kettenabbruchmittellösung in den Reaktor gelangt ist.

F. PVC-Gewinnung

1. Nicht umgesetztes VCM langsam durch Oeffnen und Schliessen des Ventils in den Abzug entlüften, bis der Reaktor drucklos ist.
2. Nach völliger VCM-Entlüftung wird das PVC durch die Bodenöffnung in eine Sammelflasche ausgetragen.
3. Filtrieren und dann mit 1 000 ml destilliertem Wasser waschen.
4. Den nassen Kuchen abstreifen.

Bei den in den nachfolgenden Beispielen beschriebenen Polymerisationsmethoden werden die folgenden Verbindungen eingesetzt.

Verbindung

(A) Triäthylenglykol-bis-3-(3-tert.-butyl-4-hydroxy-5-methylphenyl)-propionat,
(B) Octadecyl-3-(3-tert.-butyl-4-hydroxy-5-methylphenyl)-propionat,
(C) 1,6-Hexandiol-bis-3-(3-tert.-butyl-4-hydroxy-5-methylphenyl)-propionat,
(D) 1,1,3-Tris-(2-methyl-4-hydroxy-5-tert.-butylphenyl)-butan,
(E) 1,3,5-Tris-(2,6-dimethyl-3-hydroxy-4-tert.-butyl-benzyl)-isocyanurat,
(F) Bis-(2-hydroxy-3-tert.-butyl-5-methylphenyl)-methan,
(G) 1,1-Bis-(2-hydroxy-3,5-di-tert.-butylphenyl)-äthan.

Beispiel 2

Dieses Beispiel zeigt die Abbruchswirksamkeit einer erfindungsgemässeinzusetzenden Verbindung bei Polyvinylchloridsuspensionspolymerisationen.

Dabei wird die Polymerisationsarbeitsweise aus Beispiel 1 angewandt. Bei jeder Reaktion wird der Druck nach der Zugabe des Abbruchmittels sowie der Druck nach einer 15-stündigen Reaktionsfolge aufgezeichnet. Diese Werte werden durch kontinuierliche Verfolgung des Drucks im Reaktor bestimmt. Kleine Druckabfälle nach dem Zusatz des Abbruchmittels weisen auf wirksamen Abbruch hin. Die folgenden Ergebnisse werden erhalten :

| Verbindung | Konzentration (ppm) | Druck-* Abfall nach 15 Stunden (Pa) | Druck-** Abfall nach 70% Umsetzung (Pa) |
|---|---|---|---|
| - | - | $3,24 \cdot 10^6$ | $3,24 \cdot 10^6$ |
| A | 100 | $1,62 \cdot 10^6$ | $1,2 \cdot 10^6$ |
| A | 250 | 0 | 0 |
| D | 250 | $0,6 \cdot 10^6$ | $0,1 \cdot 10^6$ |
| E | 250 | $0,4 \cdot 10^6$ | 0 |
| F | 250 | $1,11 \cdot 10^6$ | 0 |
| G | 250 | $0,5 \cdot 10^6$ | 0 |

* Anfangsdruck minus Druck nach 15 Stunden.
** Druck bei 70 % Umsetzung minus Druck nach 15 Stunden.

Beispiel 3

Das Polymerisationsverfahren nach Beispiel 1 und die Testmethode nach Beispiel 2 werden mit den unten angegebenen Verbindungen nochmals wiederholt, mit der Ausnahme, dass man die Verbindungen zu Beginn der Polymerisationsreaktion zusetzt. Diese Methode stellt zwar keine industriell wünschenswerte Arbeitsweise dar, doch ist dies eine zufriedenstellende Methode, um die Kettenabbruchaktivität vorauszusagen.

Da man postulieren kann, dass die Initiationsgeschwindigkeit bei der Polymerisationsreaktion mit der Abbruchgeschwindigkeit in Beziehung steht, hat ein Zusatzstoff, der die Polymerisationsgeschwindigkeit verlangsamt, somit ebenfalls eine Wirkung auf die Abbruchgeschwindigkeit. Dementsprechend weisen längere Druckabfallzeiträume auf wirksamere Kettenabbruchmittel hin. Da ein Druckabfall nach dem Umsatz auf fortlaufende Reaktion und einen dadurch bedingten unerwünschten Effekt auf das Polyvinylchlorid hinweist, zeigen geringere Druckabfälle ebenfalls entsprechend auf wirksamere Kettenabbruchmittel hin.

Die erhaltenen Daten sind in der nachfolgenden Tabelle aufgezeichnet.

| Verbindung | Konzentration (ppm) | Zeit bis zum Druckabfall (Min.) | Druckabfall nach 900 Min. (Pa) |
|---|---|---|---|
| - | - | 365 | $4,25 \cdot 10^6$ |
| A | 100 | 540 | $1,72 \cdot 10^6$ |
| | 250 | $>900$ | $<0,4 \cdot 10^6$ |
| B | 100 | 480 | $2,1 \cdot 10^6$ |
| C | 100 | 570 | $1,62 \cdot 10^6$ |

Zusammenfassend bedeutet diese Erfindung eine neuartige Anwendung von Kettenabbruchmitteln in der Suspensionspolymerisation von Vinylchloridmonomer.

## Patentansprüche

1. Verfahren zur Suspensionspolymerisation von Vinylchloridmonomer, bei dem man das Monomer einem wirksame Mengen eines Suspensionsmittels und eines Polymerisationsinitiators enthaltenden wässrigen Reaktionssystem zusetzt, die Polymerisationsreaktion abbricht und das Polyvinylchlorid gewinnt, dadurcdh gekennzeichnet, dass man die Polymerisationsreaktion abbricht, indem man dem Reaktionssystem an einer Stelle im Bereich von 0 bis 95 % Monomerumsetzung 25-5 000 Gew.-ppm, bezogen auf Vinyl-chloridmonomer, einer der Verbindungen der Formeln

$$RX—(C_aH_{2a})—Q \qquad (I)$$

worin R

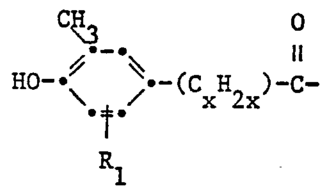

X Sauerstoff oder Schwefel, a eine ganze Zahl von 6 bis 30, x eine ganze Zahl von 0 bis 6, $R_1$ Alkyl mit 1 bis 8 Kohlenstoffatomen, Q Wasserstoff oder $—A—(C_yH_{2y})—R_2$, A Sauerstoff, Schwefel,

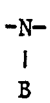 oder 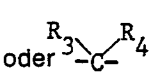

y eine ganze Zahl von 0 bis 20, B Alkyl oder Alkanoyl mit jeweils 1 bis 6 Kohlenstoffatomen, $R_2$ Wasserstoff, Hydroxyl, Alkanoyloxy mit 1 bis 6 Kohlenstoffatomen oder

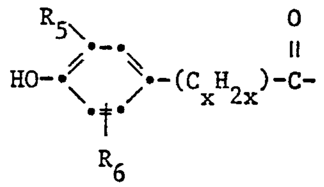

sowie $R_3$, $R_4$, $R_5$ und $R_6$ unabhängig voneinander Alkyl mit 1 bis 8 Kohlenstoffatomen bedeuten,

$$RX—[(C_bH_{2b})—Y]_d—R_7 \quad (II)$$

worin R und X die oben angegebenen Bedeutungen haben, b eine ganze Zahl von 2 bis 6, d eine ganze Zahl von 3 bis 40, Y Sauerstoff oder Schwefel und $R_7$ Wasserstoff, Alkyl mit 1 bis 6 Kohlenstoffatomen oder

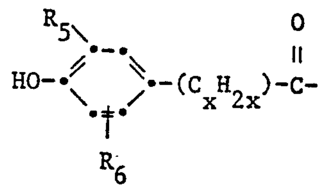

bedeuten sowie $R_5$, $R_6$ und x die oben angegebenen Bedeutungen haben,
(III) 1,1,3-Tris-(2-methyl-4-hydroxy-5-tert.-butylphenyl)-butan,
(IV) 1,3,5-Tris-(2,6-dimethyl-3-hydroxy-4-tert.-butyl-benzyl)-isocyanurat oder

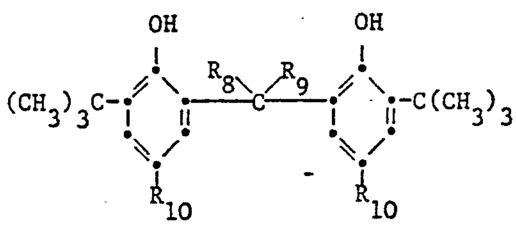

(V)

worin $R_8$ und $R_9$ unabhängig voneinander Wasserstoff oder Alkyl mit 1 bis 6 Kohlenstoffatomen und $R_{10}$ Alkyl mit 1 bis 6 Kohlenstoffatomen bedeuten, zusetzt.

2. Verfahren nach Anspruch 1, dadurch gekennzeichnet, dass man eine Verbindung der Formel I einsetzt, worin X Sauerstoff, x 0 bis 2, $R_1$ Alkyl mit 1 bis 4 Kohlenstoffatomen, A Sauerstoff, y 0 bis 2, $R_2$ Wasserstoff oder

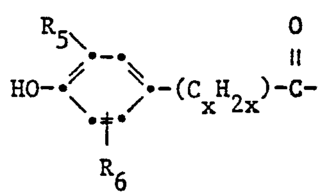

und $R_5$ und $R_6$ Alkyl mit 1 bis 4 Kohlenstoffatomen bedeuten.

3. Verfahren nach Anspruch 2, dadurch gekennzeichnet, dass in der Verbindung der Formel I $R_1$ und $R_6$ tert.-Butyl in o-Stellung zur OH-Gruppe sind, $R_5$ Methyl und x 2 bedeuten.

4. Verfahren nach Anspruch 3, dadurch gekennzeichnet, dass man Octadecyl-3-(3-tert.-butyl-4-hydroxy-5-methyl-phenyl)-propionat einsetzt.

5. Verfahren nach Anspruch 3, dadurch gekennzeichnet, dass man 1,6-Hexandiol-bis-3-(3-tert.-butyl-4-hydroxy-5-methylphenyl)-propionat einsetzt.

6. Verfahren nach Anspruch 1, dadurch gekennzeichnet, dass man eine Verbindung der Formel II einsetzt, worin X und Y Sauerstoff, x 0 bis 2, $R_1$ Alkyl mit 1 bis 4 Kohlenstoffatomen, b2, d3 bis 20, $R_7$

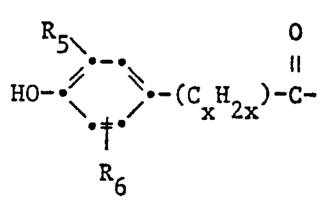

und $R_5$ und $R_6$ Alkyl mit 1 bis 4 Kohlenstoffatomen bedeuten.

7. Verfahren nach Anspruch 6, dadurch gekennzeichnet, dass in der Verbindung der Formel II $R_1$ und $R_6$ tert.-Butyl in o-Stellung zur OH-Gruppe sind und $R_5$ Methyl bedeutet.

8. Verfahren nach Anspruch 7, dadurch gekennzeichnet, dass man Triäthylenglykol-bis-3-(3-tert.-butyl-4-hydroxy-5-methylphenyl)-propionat einsetzt.

9. Verfahren nach Anspruch 1, dadurch gekennzeichnet, dass man 1,1,3-Tris-(2-methyl-4-hydroxy-5-tert.-butyl-phenyl)-butan einsetzt.

10. Verfahren nach Anspruch 1, dadurch gekennzeichnet, dass man 1,3,5-Tris-(2,6-dimethyl-3-hydroxy-4-tert.-butylbenzyl)-isocyanurat einsetzt.

11. Verfahren nach Anspruch 1, dadurch gekennzeichnet, dass man eine Verbindung der Formel V einsetzt, worin $R_8$ und $R_9$ unabhängig voneinander Wasserstoff oder Alkyl mit 1 bis 6 Kohlenstoffatomen und $R_{10}$ Alkyl mit 1 bis 6 Kohlenstoffatomen bedeuten einsetzt.

12. Verfahren nach Anspruch 1, dadurch gekennzeichnet, dass diese Zugabe im Bereich von 70-90 % Monomerumsetzung erfolgt.

13. Verfahren nach Anspruch 12, dadurch gekennzeichnet, dass 50-1 000 ppm einer der Verbindungen der Formeln I bis V dem Reaktionssystem zugesetzt werden.

14. Verfahren nach Anspruch 1, dadurch gekennzeichnet, dass 100-250 ppm Triäthylenglykol-bis-3-(3-tert.-butyl-4-hydroxy-5-methylphenyl)-propionat bei etwa 70 % Monomerumsetzung dem Reaktionssystem zugesetzt werden.

**Claims**

1. A process for the suspension polymerization of a vinyl chloride monomer, which comprises adding the monomer to an aqueous reaction system containing effective amounts of a suspending agent and a polymerization initiator, terminating the polymerization reaction and isolating the polyvinyl chloride, the polymerization reaction being terminated by adding to the reaction system at a point within the range from 0 to 95 % monomer conversion 25-5 000 ppm by weight, based on the vinyl chloride monomer, of a compound of the formula

$$RX—(C_aH_{2a})—Q \qquad (I)$$

wherein R is

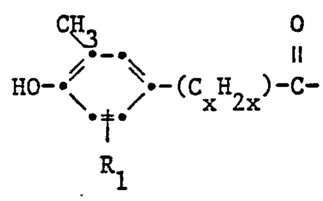

X is oxygen or sulfur, a is an integer from 6 to 30, x is an integer from 0 to 6, $R_1$ is $C_1$-$C_8$ alkyl, Q is hydrogen or $—A—(C_yH_{2y})—R_2$, A is oxygen, sulfur,

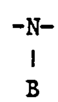 or 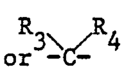

y is an integer from 0 to 20, B is $C_1$-$C_6$ alkyl or $C_1$-$C_6$ alkanoyl, $R_2$ is hydrogen, hydroxy, $C_1$-$C_6$ alkanoyloxy or

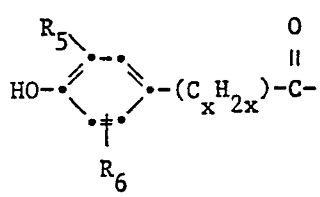

and $R_3$, $R_4$, $R_5$ and $R_6$ are each independently $C_1$-$C_8$ alkyl ;

$$RX—[C_bH_{2b})—Y]_d—R_7 \qquad (II)$$

wherein R and X are as defined above, b is an integer from 2 to 6, d is an integer from 3 to 40, Y is oxygen or sulfur, and $R_7$ is hydrogen, $C_1$-$C_6$ alkyl or

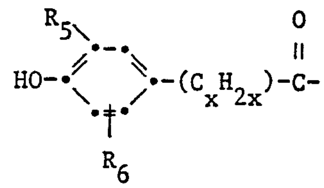

with $R_5$, $R_6$ and x being as defined above ;

(III) 1,1,3-tris(2-methyl-4-hydroxy-5-tert-butylphenyl) butane ;

(IV) 1,3,5-tris(2,6-dimethyl-3-hydroxy-4-tert-butylbenzyl)-isocyanurate ; or

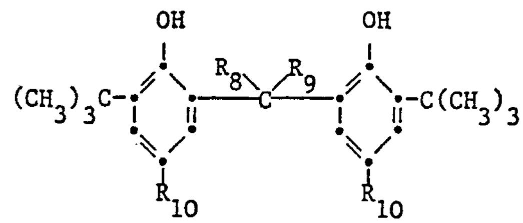

(V)

wherein $R_8$ and $R_9$ are each independently hydrogen or $C_1$-$C_6$ alkyl and $R_{10}$ is $C_1$-$C_6$ alkyl.

2. A process according to claim 1, which comprises the use of a compound of formula I, wherein X is oxygen, x is 0 to 2, $R_1$ is $C_1$-$C_4$ alkyl, A is oxygen, y is 0 to 2, $R_2$ is hydrogen or

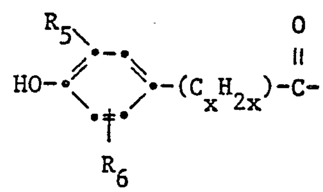

and $R_5$ and $R_6$ are $C_1$-$C_4$ alkyl.

3. A process according to claim 2, wherein in the compound of formula I $R_1$ and $R_6$ are tert-butyl in the ortho-position to the OH group, $R_5$ is methyl and x is 2.

4. A process according to claim 3, which comprises the use of octadecyl 3-(3-tert-butyl-4-hydroxy-5-methylphenyl) propionate.

5. A process according to claim 3, which comprises the use of 1,6-hexanediol bis-3-(3-tert-butyl-4-hydroxy-5-methylphenyl) propionate.

6. A process according to claim 1, which comprises the use of a compound of formula II, wherein X and Y are oxygen, x is 0 to 2, $R_1$ is $C_1$-$C_4$ alkyl, b is 2, d is 3 to 20, $R_7$ is

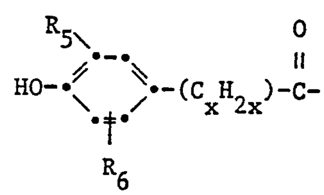

and $R_5$ and $R_6$ are $C_1$-$C_4$ alkyl.

7. A process according to claim 6, wherein in the compound of formula II $R_1$ and $R_6$ are tert-butyl in the ortho-position to the OH group and $R_5$ is methyl.

8. A process according to claim 7, which comprises the use of triethylene glycol bis-3-(3-tert-butyl-4-hydroxy-5-methylphenyl) propionate.

9. A process according to claim 1, which comprises the use of 1,1,3-tris(2-methyl-4-hydroxy-5-tert-butylphenyl) butane.

10. A process according to claim 1, which comprises the use of 1,3,5-tris-(2,6-dimethyl-3-hydroxy-4-tert-butylbenzyl) isocyanurate.

11. A process according to claim 1, which comprises the use of a compound of formula V, wherein $R_8$ and $R_9$ are each independently hydrogen or $C_1$-$C_6$ alkyl and $R_{10}$ is $C_1$-$C_{16}$ alkyl.

12. A process according to claim 1, wherein the addition occurs within the range from 70 to 90 % monomer conversion.

13. A process according to claim 12, wherein 50-1 000 ppm of one of the compounds of formula I to V are added to the reaction system.

14. A process according to claim 1, wherein 100-250 ppm of triethyleneglycol bis-3-(3-tert-butyl-4-hydroxy-5-methylphenyl) propionate are added to the reaction system at about 70 % monomer conversion.

**Revendications**

1. Procédé pour la polymérisation en suspension du chlorure de vinyle monomère dans lequel on ajoute le monomère à un système réactionnel aqueux renfermant des quantités efficaces d'un agent de mise en suspension et d'un amorceur de polymérisation, on stoppe la réaction de polymérisation et on récupère le polychlorure de vinyle, caractérisé en ce qu'on stoppe la réaction de polymérisation en ajoutant au système réactionnel, en un endroit se situant dans le domaine de 0 à 95 % de conversion du monomère, 25 à 5 000 ppm en poids, par rapport au chlorure de vinyle monomère, d'un des composés de formules

$$RX—(C_aH_{2a})—Q \qquad (I)$$

dans laquelle R représente

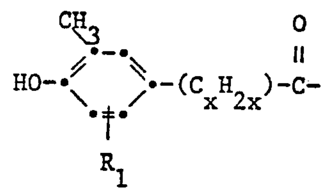

X représente de l'oxygène ou du soufre, a un nombre entier de 6 à 30, x un nombre entier de 0 à 6, $R_1$ un alkyle avec 1 à 8 atomes de carbone, Q de l'hydrogène ou $—A—(C_yH_{2y})—R_2$, A représente de l'oxygène, du soufre,

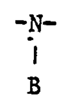 ou 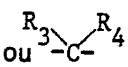

y un nombre entier de 0 à 20, B un alkyle ou un alcanoyle avec chaque fois 1 à 6 atomes de carbone, $R_2$ de l'hydrogène, un hydroxyle, un alcanoyloxy avec 1 à 6 atomes de carbone ou

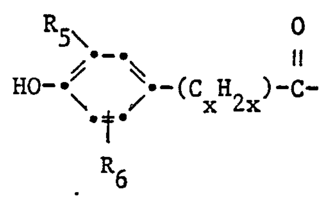

et $R_3$, $R_4$, $R_5$, et $R_6$ représentent, indépendamment les uns des autres, un alkyle avec 1 à 8 atomes de carbone,

$$RX—[(C_bH_{2b})—Y]_d—R_7 \qquad (II)$$

dans laquelle R et X ont les significations indiquées précédemment, b représente un nombre entier de 2 à 6, d un nombre entier de 3 à 40, Y de l'oxygène ou du soufre et $R_7$ de l'hydrogène, un alkyle avec 1 à 6 atomes de carbone ou

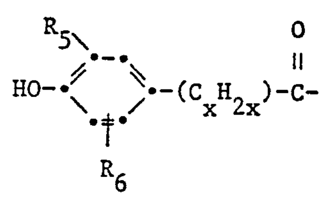

et $R_5$, $R_6$ et X ont les significations indiquées précédemment,

(III) 1,1,3-tris-(2-méthyl-4-hydroxy-5-tert.-butylphényl)-butane,

(IV) 1,3,5-tris-(2,6-diméthyl-3-hydroxy-4-tert.-butylbenzyl)-isocyanurate ou

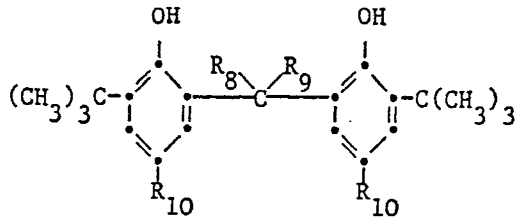

(V)

où $R_8$ et $R_9$ représentent, indépendamment les uns des autres, de l'hydrogène ou un alkyle avec 1 à 6 atomes de carbone et $R_{10}$ représente un alkyle avec 1 à 6 atomes de carbone.

2. Procédé selon la revendication 1, caractérisé en ce qu'on met en œuvre un composé de formule I dans laquelle X représente de l'oxygène, x 0 à 2, $R_1$ un alkyle avec 1 à 4 atomes de carbone, A de l'oxygène, y 0 à 2, $R_2$ de l'hydrogène ou

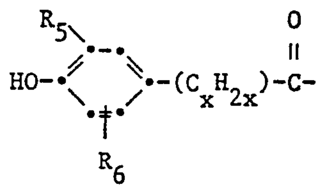

et $R_5$ et $R_6$ représentent des alkyles avec 1 à 4 atomes de carbone.

3. Procédé selon la revendication 2, caractérisé en ce que, dans le composé de formule I, $R_1$ et $R_6$ sont des tertiobutyles en position ortho par rapport au groupe OH, $R_5$ représente un méthyle et x est égal à 2.

4. Procédé selon la revendication 3, caractérisé en ce qu'on met en œuvre du 3-(3-tert.-butyl-4-hydroxy-5-méthylphényl)-propionate d'octadécyle.

5. Procédé selon la revendication 3, caractérisé en ce qu'on met en œuvre du bis-3-(3-tert.-butyl-4-hydroxy-5-méthylphényl)-propionate d'hexanediol-1,6.

6. Procédé selon la revendication 1, caractérisé en ce qu'on met en œuvre un composé de formule II dans laquelle X et Y représentent de l'oxygène, x est 0 à 2, $R_1$ représente un alkyle avec 1 à 4 atomes de carbone, b est 2, d est 3 à 20, $R_7$ représente

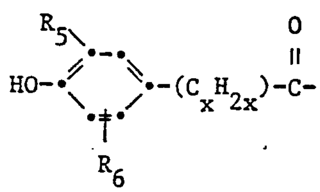

et $R_5$ et $R_6$ représentent des alkyles avec 1 à 4 atomes de carbone.

7. Procédé selon la revendication 6, caractérisé en ce que, dans le composé de formule II, $R_1$ et $R_6$ sont des tertiobutyles en position ortho par rapport au groupe OH et $R_5$ représente un méthyle.

8. Procédé selon la revendication 7, caractérisé en ce qu'on met en œuvre du bis-3-(3-tert.-butyl-4-hydroxy-5-méthylphényl)-propionate de triéthylèneglycol.

9. Procédé selon la revendication 1, caractérisé en ce qu'on met en œuvre du 1,1,3-tris-(2-méthyl-4-hydroxy-5-tert.-butylphényl)-butane.

10. Procédé selon la revendication 1, caractérisé en ce qu'on met en œuvre du 1,3,5-tris-(2,6-diméthyl-3-hydroxy-4-tert.-butylbenzyl)-isocyanurate.

11. Procédé selon la revendication 1, caractérisé en ce qu'on met en œuvre un composé de formule V dans laquelle $R_8$ et $R_9$ représentent, indépendamment l'un de l'autre, de l'hydrogène ou un alkyle avec 1 à 6 atomes de carbone et $R_{10}$ représente un alkyle avec 1 à 6 atomes de carbone.

12. Procédé selon la revendication 1, caractérisé en ce que cette addition s'effectue dans le domaine de 70 à 90 % de conversion du monomère.

13. Procédé selon la revendication 12, caractérisé en ce que 50 à 1 000 ppm d'un des composés de fomule I à V sont ajoutés au système réactionnel.

14. Procédé selon la revendication 1, caractérisé en ce que 100 à 250 ppm de bis-3-(3-tert.-butyl-4-hydroxy-5-méthylphényl)-propionate de triéthylèneglycol sont ajoutés au système réactionnel à un taux de conversion du monomère d'environ 70 %.